# EUROPEAN PATENT APPLICATION

(11) **EP 4 653 267 A1**
(43) Date of publication of application: **26.11.2025**
(21) Application number: 25176946.9
(22) Date of filing: 16.05.2025
(51) Int. Cl.: B60T 1/04, B60L 7/26, B60T 7/12, B60T 8/17, B60T 8/171, B60T 8/172, B60T 8/1761, B60T 8/1763, B60T 8/32, B60T 13/58, B60T 13/74, B60T 17/22

(54) **ELECTROMECHANICAL BRAKE CONTROL SYSTEM, ELECTRIC MOTOR CONTROL DEVICE, PROGRAM, AND BRAKE CONTROL METHOD**

(30) Priority: 23.05.2024 JP 2024084331
(71) Applicant: Nabtesco Corporation, Tokyo 102-0093 (JP)
(72) Inventor: Nozue, Yukiyasu, Chiyoda-ku, Tokyo, 102-0093 (JP); Sagawa, Takanori, Chiyoda-ku, Tokyo, 102-0093 (JP)
(74) Representative: Grünecker Patent- und Rechtsanwälte PartG mbB

(57) **Abstract**

An electromechanical brake control system (1) relating to the present invention includes a receiver (10) and a plurality of electric motor control units (20). The receiver (10) has a calculating unit (11) and a command information transmitting unit (12). The calculating unit (11) calculates target braking forces based on a brake command (service brake command). The command information transmitting unit (12) transmits command information including the target braking forces to the plurality of electric motor control unit (20). The electric motor control units (20) each have a command information receiving unit (21), a power control unit (22), a detecting unit (23), and an adjusting unit (24). The command information receiving unit (21) receives the command information. The power control unit (22) controls electric power supplied to an electric motor (31) based on the command information. The detecting unit (23) detects at least one of (i) whether sliding of a wheel (81) occurs, (ii) whether the wheel (81) has a mirror-like surface, or (iii) whether a change occurs in a coefficient of friction. The adjusting unit (24) adjusts, according to a detection result provided by the detecting unit (23), the electric power supplied to the electric motor (31) based on the command information.

## Description

### TECHNICAL FIELD

The present invention relates to an electromechanical brake control system, an electric motor control device, a program, and a brake control method.

### BACKGROUND

Railway vehicles of nowadays employ, as their brake system, pneumatic brakes where friction members are driven by pneumatic cylinders. As an alternative to the pneumatic brakes, electromechanical brakes using electric motors to drive the friction members are proposed (see, for example, Patent Literature 1). If wheel sliding against the rail is detected, sliding control is performed to eliminate the sliding. The pneumatic brakes have a receiver that can detect wheel sliding and control a sliding prevention valve. Upon control of the sliding prevention valve, the compressed air supplied to the pneumatic cylinder is exhausted, so that the braking force is reduced. As for the electromechanical brakes, Patent Literature 1 discloses that a higher-level main control unit detects wheel sliding and instructs a lower-level electromechanical drive unit to reduce the braking force.

### RELEVANT REFERENCE

### LIST OF RELEVANT PATENT LITERATURE

[Patent Literature 1] Chinese Patent Application Publication No. 111959466

### SUMMARY

Patent Literature 1 discloses a technique of how electromechanical brakes control wheel sliding, according to which the main control unit is configured to determine whether wheel sliding is occurring and to transmit instruction information indicating the result of the determination to the electromechanical drive unit. This configuration requires time to complete the communication and leaves room for improvement in responsiveness. Responsiveness becomes an issue not only in cases where wheel sliding occurs, but also in cases where the braking force is adjusted due to various factors including changes in the interaction between the friction member and the wheel (changes in the coefficient of friction).

In view of the above circumstances, it is an object of the present invention to provide an electromechanical brake control system, an electric motor control device, a program, and a brake control method that are capable of improving the responsiveness of electromechanical brakes in adjusting the braking force.
(1) An aspect of the present invention provides an electromechanical brake control system including: a receiver, a plurality of brake units for respectively stopping a plurality of wheels provided on a vehicle, and a plurality of electric motor control units for respectively controlling a plurality of electric motors of the plurality of brake units according to command information transmitted from the receiver. The receiver includes: a calculating unit for calculating target braking forces for the brake units based on a brake command, the brake units being configured to respectively stop the wheels by driving friction members using power transmitted from the electric motors; and a command information transmitting unit for transmitting the command information including the calculated target braking forces to the electric motor control units. Each of the electric motor control units includes: a command information receiving unit for receiving the transmitted command information; a power control unit for controlling electric power supplied to a corresponding one of the electric motors based on the command information; a detecting unit for detecting, based on a measurement of at least one of (i) a wheel speed of a corresponding one of the wheels, (ii) a pressing force applied to press a corresponding one of the friction members against a contact surface of the corresponding wheel, (iii) a condition of a rail on which the vehicle is running, or (iv) a condition of the corresponding wheel, at least one of (I) whether sliding of the corresponding wheel occurs, (II) whether the corresponding wheel has a mirror-like surface, or (III) whether a change occurs in a coefficient of friction between the corresponding wheel and the corresponding friction member or between the rail and a contact surface of the corresponding wheel; and an adjusting unit for adjusting, according to a detection result provided by the detecting unit, the electric power supplied to the corresponding electric motor based on the command information.

In the implementation, the electric motor control unit detects at least one of occurrence of sliding of the wheel, presence of a mirror-like surface in the wheel, or a change in the coefficient of friction between the friction member and the contact surface of the wheel, and adjusts, according to the detection result, the electric power supplied to the electric motor based on the command information. It thus takes less time to adjust, according to the detection result, the electric power supplied to the electric motor based on the command information. Therefore, improved responsiveness can be achieved in adjusting, according to the detection result, the electric power supplied to the electric motor based on the command information.

(2) In the electromechanical brake control system of (1), the detecting unit may detect whether sliding of the corresponding wheel occurs, based on a measurement of the wheel speed. The adjusting unit may reduce the electric power supplied to the corresponding electric motor based on the command information, in response to the detecting unit detecting that sliding of the corresponding wheel occurs.

In the implementation, the electric motor control unit can detect occurrence of sliding of the wheel, and reduce the electric power supplied to the electric motor based on the command information upon detection of occurrence of sliding of the wheel. It thus takes less time to reduce the electric power supplied to the electric motor based on the command information, upon occurrence of sliding of the wheel. Therefore, improved responsiveness can be achieved in reducing, upon occurrence of sliding of the wheel, the electric power supplied to the electric motor based on the command information.

(3) In the electromechanical brake control system of (1), the detecting unit may detect whether the corresponding wheel has a mirror-like surface based on the pressing force. The adjusting unit may increase the electric power supplied to the corresponding electric motor based on the command information, in response to the detecting unit detecting the corresponding wheel has a mirror-like surface.

In the implementation, the electric motor control unit can detect presence of a mirror-like surface in the wheel, and increase, upon detection of a mirror-like surface in the wheel, the electric power supplied to the electric motor based on the command information. It thus takes less time to increase, in response to presence of a mirror-like surface in the wheel, the electric power supplied to the electric motor based on the command information. Therefore, improved responsiveness can be achieved in increasing, in response to presence of a mirror-like surface in the wheel, the electric power supplied to the electric motor based on the command information. As the electric power supplied to the electric motor increases, the pressing force applied to press the friction member against the contact surface of the wheel increases. This results in roughening the wheel, thereby eliminating the mirror-like surface of the wheel. In this manner, improved responsiveness can be achieved in eliminating a mirror-like surface of the wheel.

(4) In the electromechanical brake control system of (1), the detecting unit may detect whether a change occurs in the coefficient of friction between the corresponding wheel and the corresponding friction member or between the rail and the contact surface of the corresponding wheel based on measurements of the wheel speed and a temperature of the corresponding friction member. The adjusting unit may reduce the electric power supplied to the corresponding electric motor based on the command information, in response to the detecting unit detecting an increase in the coefficient of friction, and increase the electric power supplied to the corresponding electric motor based on the command information, in response to the detecting unit detecting a decrease in the coefficient of friction.

In the implementation, the electric motor control unit can detect a change in the coefficient of friction between the friction member and the contact surface of the wheel or a change in the coefficient of friction between the rail and the contact surface of the wheel. The electric motor control unit reduces, upon detection of an increase in the coefficient of friction, the electric power supplied to the electric motor based on the command information, and increases, upon detection of a decrease in the coefficient of friction, the electric power supplied to the electric motor based on the command information. It thus takes less time to reduce, upon an increase in the coefficient of friction, the electric power supplied to the electric motor based on the command information and to increase, upon a decrease in the coefficient of friction, the electric power supplied to the electric motor based on the command information. Therefore, improved responsiveness can be achieved in reducing, upon an increase in the coefficient of friction, the electric power supplied to the electric motor based on the command information and in increasing, upon a decrease in the coefficient of friction, the electric power supplied to the electric motor based on the command information.

(5) In the electromechanical brake control system of (1), each of the electric motor control units may include a notification information transmitting unit for transmitting, if the adjusting unit adjusts the electric power supplied to the corresponding electric motor based on the command information, notification information to the receiver including a notification that the adjusting unit adjusts the electric power supplied to the corresponding electric motor based on the command information. The receiver may include a notification information receiving unit for receiving the transmitted notification information.

In the implementation, if each electric motor control unit adjusts the electric power supplied to the electric motor, it sends notification information to the receiver including a notification that the electric power has been adjusted. Thus, the receiver can know whether each electric motor control unit has made adjustment to the electric power, which can lead to improved safety. The notification information is useful for future improvement and development of the electromechanical brake control system.

(6) In the electromechanical brake control system of (2), the adjusting unit may increase the electric power supplied to the corresponding electric motor if the detecting unit does not detect that sliding of the corresponding wheel occurs and an adjusting unit of a different one of the electric motor control units reduces electric power supplied to a corresponding one of the electric motors.

In the implementation, if sliding of the wheel is not occurring and a different one of the electric motor control units reduces the electric power upon occurrence of wheel sliding, the electric motor control unit increases the electric power. This ensures that a sufficient braking force can be produced as a whole.

(7) In the electromechanical brake control system of (2) or (4), each of the electric motor control units may have an emergency command receiving unit for receiving an emergency command. The power control unit may prioritize the emergency command over the command information and controls the electric power supplied to the corresponding electric motor based on the emergency command. The adjusting unit may adjust, according to a detection result provided by the detecting unit, the electric power supplied to the corresponding electric motor based on the emergency command.

In the implementation, the electric motor control unit adjusts, according to the detection result, the electric power supplied to the electric motor based on the emergency command. It thus takes less time to adjust, according to the detection result, the electric power supplied to the electric motor based on the emergency command. Therefore, improved responsiveness can be achieved in adjusting, according to the detection result, the electric power supplied to the electric motor based on the emergency command. In other words, improved responsiveness can be achieved even in emergency situations, such as when emergency braking is activated. Therefore, the braking distance can be shortened, for example.

(8) An aspect of the present invention provides an electric motor control device for controlling an electric motor of a brake unit, the brake unit being configured to stop a wheel provided on a vehicle. The electric motor control device includes: a command information receiving unit for receiving command information including a target braking force for the brake unit calculated based on a brake command; a power control unit for controlling electric power supplied to the electric motor based on the command information; a detecting unit for detecting, based on a measurement of at least one of (i) a wheel speed of the wheel, (ii) a pressing force applied to press a friction member of the brake unit against a contact surface of the wheel, (iii) a condition of a rail on which the vehicle is running, or (iv) a condition of the wheel, at least one of (I) whether sliding of the wheel occurs, (II) whether the wheel has a mirror-like surface, or (III) whether a change occurs in a coefficient of friction between the wheel and the friction member of the brake unit or between the rail and a contact surface of the wheel; and an adjusting unit for adjusting, according to a detection result provided by the detecting unit, the electric power supplied to the electric motor based on the command information.

According to the implementation, as with the electromechanical brake control system of (1), improved responsiveness can be achieved in adjusting, according to the detection result, the electric power supplied to the electric motor based on the command information.

(9) An aspect of the present invention provides a program for use in an electromechanical brake control system including a receiver, a plurality of brake units for respectability stopping a plurality of wheels provided on a vehicle, and a plurality of electric motor control devices for respectively controlling a plurality of electric motors of the plurality of brake units according to command information transmitted from the receiver, the program being configured to cause a first computer to function as the receiver and a second computer to function as each of the electric motor control devices. The program causes the first computer to: calculate target braking forces for the brake units based on a brake command, the brake units being configured to respectively stop the wheels by driving friction members using power transmitted from the electric motors; and transmit the command information including the calculated target braking forces. The program causes the second computer to: receive the transmitted command information; control electric power supplied to a corresponding one of the electric motors based on the command information; detect, based on a measurement of at least one of (i) a wheel speed of a corresponding one of the wheels, (ii) a pressing force applied to press a corresponding one of the friction members against a contact surface of the corresponding wheel, (iii) a condition of a rail on which the vehicle is running, or (iv) a condition of the corresponding wheel, at least one of (I) whether sliding of the corresponding wheel occurs, (II) whether the corresponding wheel has a mirror-like surface, or (III) whether a change occurs in a coefficient of friction between the corresponding wheel and the corresponding friction member or between the rail and a contact surface of the corresponding wheel; and adjust, according to a result of the detection, the electric power supplied to the corresponding electric motor based on the command information.

According to the implementation, as with the electromechanical brake control system of (1), improved responsiveness can be achieved in adjusting, according to the detection result, the electric power supplied to the electric motor based on the command information.

(10) An aspect of the present invention provides a program for causing a computer to function as an electric motor control device for controlling an electric motor of a brake unit, the brake unit being configured to stop a wheel provided on a vehicle. The program causes the computer to: receive command information including a target braking force for the brake unit calculated based on a brake command; control electric power supplied to the electric motor based on the command information; detect, based on a measurement of at least one of (i) a wheel speed of the wheel, (ii) a pressing force applied to press a friction member of the brake unit against a contact surface of the wheel, (iii) a condition of a rail on which the vehicle is running, or (iv) a condition of the wheel, at least one of (I) whether sliding of the wheel occurs, (II) whether the wheel has a mirror-like surface, or (III) whether a change occurs in a coefficient of friction between the wheel and the friction member of the brake unit or between the rail and a contact surface of the wheel; and adjust, according to a result of the detection, the electric power supplied to the electric motor based on the command information.

According to the implementation, as with the electromechanical brake control system of (1), improved responsiveness can be achieved in adjusting, according to the detection result, the electric power supplied to the electric motor based on the command information.

(11) An aspect of the present invention provides a brake control method using a receiver, a plurality of brake units for respectively stopping a plurality of wheels provided on a vehicle, and a plurality of electric motor control devices for respectively controlling a plurality of electric motors of the plurality of brake units according to command information transmitted from the receiver. The brake control method includes steps of: calculating, by the receiver, target braking forces for the brake units based on a brake command, the brake units being configured to stop the wheels by driving friction members using power transmitted from the electric motors; transmitting, by the receiver, the command information including the calculated target braking forces to the electric motor control units, receiving, by each electric motor control device, the transmitted command information; controlling, by the each electric motor control device, electric power supplied to a corresponding one of the electric motors based on the command information; detecting, by the each electric motor control device, based on a measurement of at least one of (i) a wheel speed of a corresponding one of the wheels, (ii) a pressing force applied to press a corresponding one of the friction members against a contact surface of the corresponding wheel, (iii) a condition of a rail on which the vehicle is running, or (iv) a condition of the corresponding wheel, at least one of (I) whether sliding of the corresponding wheel occurs, (II) whether the corresponding wheel has a mirror-like surface, or (III) whether a change occurs in a coefficient of friction between the corresponding wheel and the corresponding friction member or between the rail and a contact surface of the corresponding wheel; and adjusting, by the each electric motor control device, according to a result of the detection, the electric power supplied to the corresponding electric motor based on the command information.

According to the implementation, as with the electromechanical brake control system of (1), improved responsiveness can be achieved in adjusting, according to the detection result, the electric power supplied to the electric motor based on the command information.

(12) An aspect of the present invention provides a brake control method using an electric motor control device for controlling an electric motor of a brake unit, the brake unit being configured to stop a wheel provided on a vehicle. The brake control method includes steps of: receiving command information including a target braking force for the brake unit calculated based on a brake command; controlling electric power supplied to the electric motor based on the command information; detecting, based on a measurement of at least one of (i) a wheel speed of the wheel, (ii) a pressing force applied to press a friction member of the brake unit against a contact surface of the wheel, (iii) a condition of a rail on which the vehicle is running, or (iv) a condition of the wheel, at least one of (I) whether sliding of the wheel occurs, (II) whether the wheel has a mirror-like surface, or (III) whether a change occurs in a coefficient of friction between the wheel and the friction member of the brake unit or between the rail and a contact surface of the wheel; and adjusting, according to a result of the detection, the electric power supplied to the electric motor based on the command information.

According to the implementation, as with the electromechanical brake control system of (1), improved responsiveness can be achieved in adjusting, according to the detection result, the electric power supplied to the electric motor based on the command information.

### ADVANTAGEOUS EFFECTS

The present invention can improve the responsiveness of electromechanical brakes in adjusting the braking force.

### BRIEF DESCRIPTION OF THE DRAWINGS

Fig. 1 schematically shows the configuration of a railway vehicle having an electromechanical brake control system relating to an embodiment.
Fig. 2 is a block diagram schematically illustrating the electromechanical brake control system relating to the embodiment.
Fig. 3 is a flow chart illustrating an example of how the electromechanical brake control system operates in a first implementation example.
Fig. 4 is a flow chart illustrating an example of how the electromechanical brake control system operates in a second implementation example.
Fig. 5 is a flow chart illustrating an example of how the electromechanical brake control system operates in a third implementation example.
Fig. 6 shows an example of a table used in the third implementation example.

### DESCRIPTION OF THE PREFERRED EMBODIMENTS

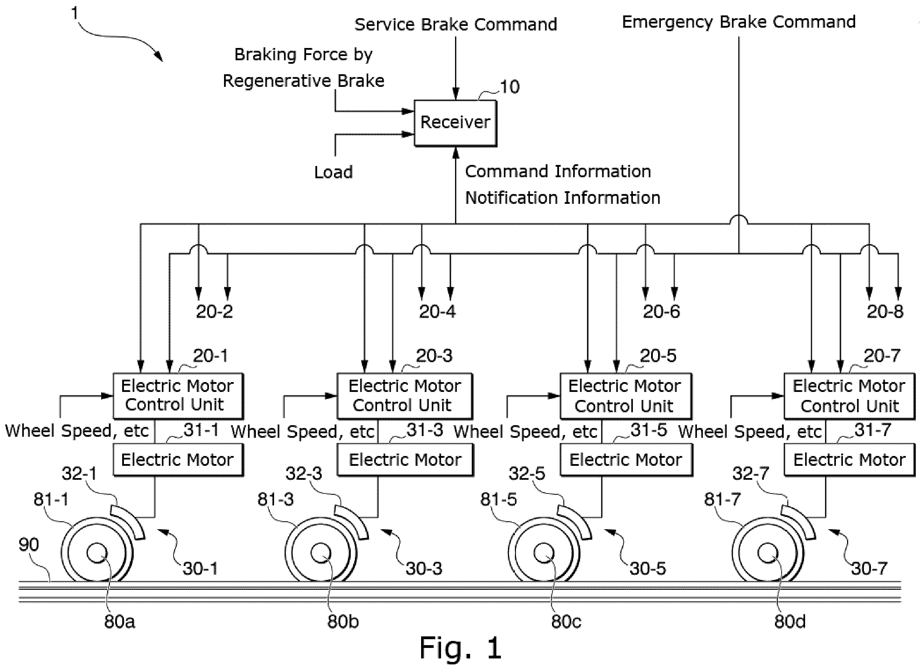

Embodiments of the present invention will now be described with reference to the appended drawings. Fig. 1 schematically shows the configuration of a railway vehicle (hereinafter, simply referred to as the vehicle) having an electromechanical brake control system 1 relating to an embodiment. Fig. 1 only shows one side of the vehicle and does not show part or all of the other (opposite) side of the vehicle.

### (Vehicle)

The following first describes the vehicle. One vehicle has two bogies (not shown) at the front and rear. One bogie has two axles. In Fig. 1, one of the bogies (not shown) has axles 80a and 80b. The other bogie (not shown) has axles 80c and 80d. The axles 80a to 80d are collectively referred to as the axles 80 if it is not necessary to distinguish them from each other. One axle 80 has two wheels. In Fig. 1, the axle 80a has wheels 81-1 and 81-2 (not shown). The axle 80b has wheels 81-3 and 81-4 (not shown). The axle 80c has wheels 81-5 and 81-6 (not shown). The axle 80d has wheels 81-7 and 81-8 (not shown). The wheels 81-1 through 81-8 are collectively referred to as the wheels 81 if it is not necessary to distinguish them. In other words, one vehicle has two bogies, four axles 80 and eight wheels 81. The reference sign 90 indicates a rail.

The vehicle has brake units for stopping the respective wheels 81. The brake units each have an electric motor, and a friction member to be driven by the power of the electric motor. Referring to Fig. 1, the wheel 81-1 is paired with a brake unit 30-1 having an electric motor 31-1, and a friction member 32-1 to be driven by the power of the electric motor 31-1. The wheel 81-2 (not shown) is paired with a brake unit 30-2 (not shown) having an electric motor 31-2 (not shown), and a friction member 32-2 (not shown) to be driven by the power of the electric motor 31-2 (not shown). The wheel 81-3 is paired with a brake unit 30-3 having an electric motor 31-3, and a friction member 32-3 to be driven by the power of the electric motor 31-3. The wheel 81-4 (not shown) is paired with a brake unit 30-4 (not shown) having an electric motor 31-4 (not shown), and a friction member 32-4 (not shown) to be driven by the power of the electric motor 31-4. The same is true for the wheels 81-5 to 81-8 (not shown). The brake units 30-1 to 30-8 are collectively referred to as the brake units 30 if it is not necessary to distinguish them. The electric motors 31-1 to 31-8 are collectively referred to as the electric motors 31 if it is not necessary to distinguish them. The friction members 32-1 to 32-8 are collectively referred to as the friction members 32 if it is not necessary to distinguish them. In other words, one vehicle has eight brake units 30 (the brake units 30-1 to 30-8) respectively corresponding to the eight wheels 81 (wheels 81-1 to 81-8).

The vehicle has speed sensors (not shown). Specifically, the vehicle has a speed sensor (referred to as the first speed sensor) for measuring the wheel speed of the wheels 81 on the axle 80a (the wheels 81-1 and 81-2), a speed sensor (referred to as the second speed sensor) for measuring the wheel speed of the wheels 81 on the axle 80b (the wheels 81-3 and 81-4), a speed sensor (referred to as the third speed sensor) for measuring the wheel speed of the wheels 81 on the axle 80c (the wheels 81-5 and 81-6), and a speed sensor (referred to as the fourth speed sensor) for measuring the wheel speed of the wheels 81 on the axle 80d (the wheels 81-7 and 81-8). In other words, one vehicle has four speed sensors (the first to fourth speed sensors) respectively corresponding to the four axles 80 (the axles 80a to 80d).

The first speed sensor measures the wheel speed of the wheels 81 on the axle 80a based on the amount of rotation of the axle 80a. The first speed sensor may include a rotation sensor such as an encoder for outputting a pulse signal corresponding to the rotational position of the axle 80a. The first speed sensor calculates the wheel speed of the wheels 81 on the axle 80a by multiplying the number of pulses per unit time of the pulse signal by a predetermined coefficient. The same applies to the second, third, and fourth speed sensors.

The vehicle has load sensors (not shown) for measuring pressing forces applied to press the friction members 32 against the contact surfaces of the wheels 81 (the pressing forces exerted by the friction members 32 against the wheels 81). Specifically, the vehicle has a load sensor to measure the pressing force applied by the friction member 32-1 onto the wheel 81-1, a load sensor to measure the pressing force applied by the friction member 32-2 onto the wheel 81-2, a load sensor to measure the pressing force applied by the friction member 32-3 onto the wheel 81-3, a load sensor to measure the pressing force applied by the friction member 32-4 onto the wheel 81-4, a load sensor to measure the pressing force applied by the friction member 32-5 onto the wheel 81-5, a load sensor to measure the pressing force applied by the friction member 32-6 onto the wheel 81-6, a load sensor to measure the pressing force applied by the friction member 32-7 onto the wheel 81-7, and a load sensor to measure the pressing force applied by the friction member 32-8 onto the wheel 81-8. In other words, one vehicle has eight load sensors respectively corresponding to the eight friction members 32 (the friction members 32-1 to 32-8).

The vehicle has one or more cameras (not shown) for capturing images of the rail 90 on which the vehicle is traveling. For example, one vehicle may have one camera for capturing images of the rail 90. For example, one vehicle may have eight cameras respectively corresponding to the eight brake units 30 (the brake units 30-1 to 30-8), and each camera may capture images of the rail 90.

The vehicle may have cameras (not shown) to capture images of the wheels 81. Specifically, the vehicle has a camera for capturing images of the contact surface of the wheel 81-1 (the area against which the friction member 32-1 is pressed), a camera for capturing images of the contact surface of the wheel 81-2 (the area against which the friction member 32-2 is pressed), a camera for capturing images of the contact surface of the wheel 81-3 (the area against which the friction member 32-3 is pressed), a camera for capturing images of the contact surface of the wheel 81-4 (the area against which the friction member 32-4 is pressed), a camera for capturing images of the contact surface of the wheel 81-5 (the area against which the friction member 32-5 is pressed), a camera for capturing images of the contact surface of the wheel 81-6 (the area against which the friction member 32-6 is pressed), a camera for capturing images of the contact surface of the wheel 81-7 (the area against which the friction member 32-7 is pressed), and a camera for capturing images of the contact surface of the wheel 81-8 (the area against which the friction member 32-8 is pressed). In other words, one vehicle may have cameras for respectively capturing images of the eight wheels 81 (the wheels 81-1 to 81-8).

The vehicle has temperature sensors (not shown) for measuring the temperatures of the friction members 32. Specifically, the vehicle has a temperature sensor for measuring the temperature of the friction member 32-1, a temperature sensor for measuring the temperature of the friction member 32-2, a temperature sensor for measuring the temperature of the friction member 32-3, a temperature sensor for measuring the temperature of the friction member 32-4, a temperature sensor for measuring the temperature of the friction member 32-5, a temperature sensor for measuring the temperature of the friction member 32-6, a temperature sensor for measuring the temperature of the friction member 32-7, and a temperature sensor for measuring the temperature of the friction member 32-8. In other words, one vehicle has eight temperature sensors respectively corresponding to the eight friction members 32 (the friction members 32-1 to 32-8).

### (Electromechanical Brake Control System)

As shown in Fig. 1, the electromechanical brake control system 1 has a receiver 10 and electric motor control units (electric motor control devices) 20-1 to 20-8. The electric motor control units 20-1, 20-3, 20-5, and 20-7 are located on one side of the vehicle. The electric motor control units 20-2, 20-4, 20-6, and 20-8 are located on the other side of the vehicle. The electric motor control unit 20-1 controls the brake unit 30-1 for stopping the wheel 81-1. The electric motor control unit 20-2 controls the brake unit 30-2 (not shown) for stopping the wheel 81-2 (not shown). The same is true for the electric motor control units 20-3 to 20-8. The electric motor control units 20-1 to 20-8 are all configured in the same manner. The electric motor control units 20-1 to 20-8 are collectively referred to as the electric motor control units 20 if it is not necessary to distinguish them. In other words, one vehicle has one receiver 10, and eight electric motor control units 20 (the electric motor control units 20-1 to 20 -8) respectively corresponding to the eight brake units 30 (the brake units 30-1 to 30-8).

The receiver 10 receives a service brake command (also referred to as a brake command) from an external device (e.g., a vehicle control device (not shown)) by means of a metal wire. The service brake command is set by an operating position of a brake handle, which is to be operated by the driver. For example, a digital control signal of a certain notch (level) is output to the receiver 10 as a service brake command, with the notch ranging from one to seven and depending on the operating position of the brake handle.

In response to receiving a service brake command, the receiver 10 calculates a target braking force (target brake force) based on the service brake command and the like. The target braking force usually increases as the notch increases. The receiver 10 transmits command information including the target braking force to the eight electric motor control units 20.

Between the receiver 10 and the electric motor control units 20, CAN communication is performed. The receiver 10 functions as the master (the control side), and the electric motor control units 20 function as the slave (the non-control side). Information transmission from the receiver 10 to the respective electric motor control units 20 takes place at regular intervals (e.g., 2.5 ms) and in sequence. There are 8 electric motor control units 20. If the interval is set at 2.5 ms, for example, the transmission to the 8 electric motor control units 20 takes 20 ms (2.5 ms x 8) to complete a single cycle. In other words, it takes 20 ms for the receiver 10 to complete transmission of a single piece of command information to all of the electric motor control units 20.

The electric motor control units 20 receive the command information from the receiver 10. In response to receiving the command information, each electric motor control unit 20 controls the corresponding brake unit 30. Specifically, the electric motor control unit 20 controls the electric power supplied to the electric motor 31 from the power source (not shown) based on the command information. In more detail, the electric motor control unit 20 determines the electric power supplied to the electric motor 31 based on the command information and controls the electric motor 31 with the determined electric power.

The electric motor control unit 20 receives an emergency brake command (also referred to as an emergency brake command) from an external device (e.g., the vehicle control device (not shown), a maintenance device (not shown)) by means of a metal wire. Emergency braking is performed with the greatest focus on stopping a running train. Therefore, the emergency brake command often requests a higher braking force than the braking force resulting from the service brake command. When receiving the emergency brake command, the electric motor control unit 20 controls the brake unit 30 in the same manner as when receiving the command information. Specifically, the electric motor control unit 20 determines the electric power supplied to the electric motor 31 based on the emergency brake command, and controls the electric motor 31 with the determined electric power.

When receiving the command information and emergency brake command, the electric motor control unit 20 prioritizes to the emergency brake command. In other words, when receiving the command information and emergency brake command, the electric motor control unit 20 controls the electric power supplied to the electric motor 31 based on the emergency brake command. Therefore, when receiving the command information and emergency brake command, the electric motor control unit 20 determines the electric power supplied to the electric motor 31 based on the emergency brake command and controls the electric motor 31 with the determined power.

The electric motor control unit 20 may adjust (increase or decrease) the electric power supplied to the electric motor 31 based on the command information (the electric power determined based on the command information). The electric motor control unit 20 may adjust the electric power supplied to the electric motor 31 based on the emergency brake command (the electric power determined based on the emergency brake command). This will be further descried below.

In response to adjusting the electric power supplied to the electric motor 31 (the electric power determined based on the command information, the electric power determined based on the emergency brake command), the electric motor control unit 20 controls the electric motor 31 with the adjusted electric power (the electric power after the adjustment).

In response to adjusting the electric power supplied to the electric motor 31 (the electric power determined based on the command information, the electric power determined based on the emergency brake command), the electric motor control unit 20 sends notification information including a notification that the electric power has been adjusted, to the receiver 10 via CAN communication.

Each brake unit 30 brakes the corresponding wheel 81 according to the control performed by the corresponding electric motor control unit 20. Each electric motor 31 is driven (rotated) according to the control performed by the corresponding electric motor control unit 20. The power produced by the electric motor 31 (power produced by the rotational motion) is converted into linear motion through a conversion mechanism (e.g., ball screw) and transmitted to the friction member 32. The friction member 32 is pressed against the contact surface of the wheel 81 by the power transmitted from the electric motor 31.
In other words, the brake unit 30 brakes the wheel 81 in such a manner that the electric motor 31 is driven according to the control performed by the electric motor control unit 20 to press the friction member 32 against the wheel 81 in order to exert a pressing force (braking force).

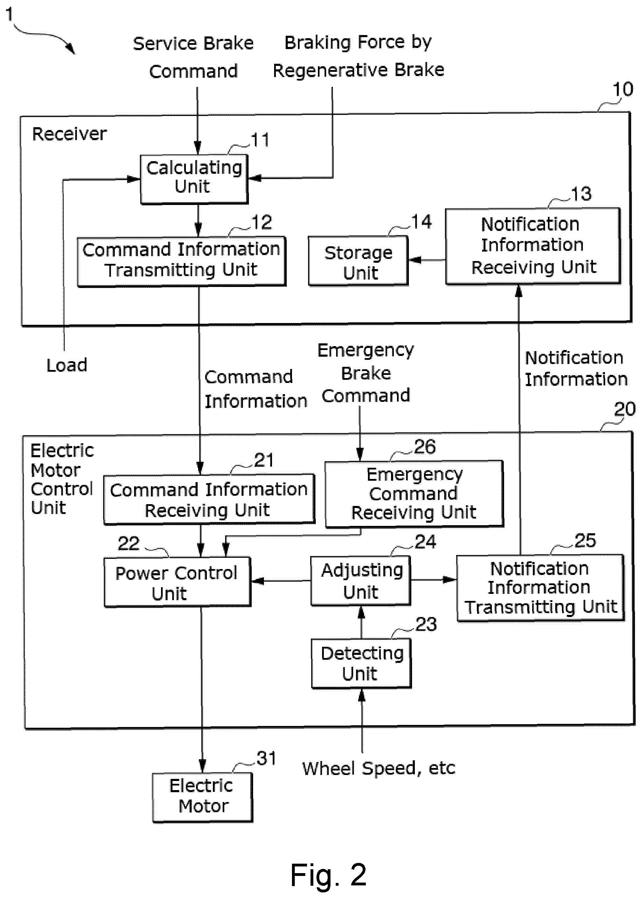

Fig. 2 is a block diagram schematically showing the electromechanical brake control system 1 relating to the embodiment. The block diagram in Fig. 2 shows one electric motor control unit 20 as a representative, but the same applies to the other seven electric motor control units 20.

As shown in Fig. 2, the receiver 10 includes a calculating unit 11, a command information transmitting unit 12, a notification information receiving unit 13, and a storage unit 14. The electric motor control unit 20 includes a command information receiving unit 21, a power control unit 22, a detecting unit 23, an adjusting unit 24, a notification information transmitting unit 25, and an emergency command receiving unit 26. The electric motor control unit 20 may also include a storage unit (not shown).

The calculating unit 11 receives a service brake command from an external device. The calculating unit 11 obtains a load indicating the number of passengers or the amount of freight from a load device (load sensor (not shown)) (receives a value indicating a load). The calculating unit 11 inquires a VVVF control device (not shown) to know the braking force applied by a regenerative brake (receives a value indicating the braking force applied by the regenerative brake). The calculating unit 11 calculates a target braking force (target braking force to be generated by the brake unit 30) based on the service brake command, the load, and the braking force applied by the regenerative brake. The target braking force is exerted to stop the wheel 81 by the friction member 32 when the friction member 32 is driven by the power transmitted from the electric motor 31.

The command information transmitting unit 12 transmits command information including the target braking force calculated by the calculating unit 11 to the electric motor control unit 20 via CAN communication.

The notification information receiving unit 13 receives notification information including a notification that the electric power has been adjusted, from the electric motor control unit 20. As mentioned above, the electric motor control unit 20 transmits notification information to the receiver 10 via CAN communication if the electric power supplied to the electric motor 31 is adjusted. The command information transmitting unit 12 and notification information receiving unit 13 may be constituted by the same component (device).

The storage unit 14 stores the notification information received by the notification information receiving unit 13. For example, the storage unit 14 may store the notification information in association with time information (the reception time).

The command information receiving unit 21 receives the command information from the receiver 10 via CAN communication. The emergency command receiving unit 26 receives an emergency brake command (emergency command) from an external device by means of a metal wire.

In response to the command information receiving unit 21 receiving the command information, the power control unit 22 controls the electric power supplied to the electric motor 31 based on the command information. Specifically, the power control unit 22 determines the electric power to be supplied to the electric motor 31 based on the command information and controls the electric motor 31 with the determined electric power. The power control unit 22 may determine the electric power to be supplied to the electric motor 31 based on the command information, through calculation using the target braking force included in the command information and a predetermined coefficient. The predetermined coefficient may be obtained by multiplying a reference coefficient of friction (i.e., the standard coefficient of friction between the friction member 32 and the contact surface of the wheel 81) by a fixed value.

In response to the emergency command receiving unit 26 receiving an emergency brake command, the power control unit 22 controls the electric power supplied to the electric motor 31 based on the emergency brake command. Specifically, the power control unit 22 determines the electric power to be supplied to the electric motor 31 based on the emergency brake command, and controls the electric motor 31 with the determined electric power. The power control unit 22 may determine the electric power to be supplied to the electric motor 31 based on the emergency brake command through calculation using the braking force indicated by the emergency brake command and a predetermined coefficient. The predetermined coefficient may be obtained by multiplying the reference coefficient of friction (i.e., the standard coefficient of friction between the friction member 32 and the contact surface of the wheel 81) by a fixed value.

If the command information receiving unit 21 receives command information and the emergency command receiving unit 26 receives an emergency brake command, the power control unit 22 gives priority to controlling the electric power based on the emergency brake command. Specifically, in this case, the power control unit 22 determines the electric power to be supplied to the electric motor 31 based on the emergency brake command, and controls the electric motor 31 with the determined power.

If the electric power supplied to the electric motor 31 (the electric power determined based on the command information, the electric power determined based on the emergency brake command) is adjusted by the adjusting unit 24, the power control unit 22 controls the electric motor 31 with the adjusted electric power.

The detecting unit 23 detects, based on the measurement of at least one of (i) the wheel speed of the wheel 81, (ii) the pressing force pressing the friction member 32 against the contact surface of the wheel 81, (iii) the condition of the rail 90 on which the vehicle is traveling, or (iv) the condition of the wheel 81, at least one of (I) whether sliding of the wheel 81 occurs, (II) whether the wheel 81 has a mirror-like surface, or (III) whether a change occurs in the coefficient of friction between the friction member 32 and the contact surface of the wheel 81. In other words, based on the above measurements, the detecting unit 23 determines one or more of the following: whether sliding of the wheel 81 occurs; whether the wheel 81 has a mirror-like surface; or whether a changes occurs in the coefficient of friction between the friction member 32 and the contact surface of the wheel 81.

The detecting unit 23 obtains the wheel speed measurements taken by the four speed sensors (receives speed signals, speed information). The detecting unit 23 may obtain the wheel speed measurements from the speed sensors or from another one of the electric motor control units 20. For example, the detecting unit 23 obtains, for the corresponding wheel 81 to be braked, the wheel speed measurement taken by the corresponding speed sensor from the corresponding speed sensor, and, for the other wheels 81, the wheel speed measurements taken by the corresponding speed sensors from the other electric motor control units 20. The following description uses the detecting units 23 of the electric motor control units 20-1 to 20-4 as an example, but the same applies to the detecting units 23 of the electric motor control sections 20-5 to 20-8.

The detecting unit 23 of the electric motor control unit 20-1 obtains the wheel speed measurements taken by the first speed sensor (the wheel speed measurements for the wheels 81-1 and 81-2) from the first speed sensor. The detecting unit 23 of the electric motor control unit 20-1 obtains the wheel speed measurements taken by the second speed sensor (wheel speed measurements for the wheels 81-3 and 81-4) from the electric motor control unit 20-3 (or electric motor control unit 20-4) (obtains by means of CAN communication). The detecting unit 23 of the electric motor control unit 20-1 obtains the wheel speed measurements taken by the third speed sensor (wheel speed measurements for the wheels 81-5 and 81-6) from the electric motor control unit 20-5 (or electric motor control unit 20-6) (obtains by means of CAN communication). The detecting unit 23 of the electric motor control unit 20-1 obtains the wheel speed measurements taken by the fourth speed sensor (wheel speed measurements for the wheels 81-7 and 81-8) from the electric motor control unit 20-7 (or electric motor control unit 20-8) (obtains by means of CAN communication). The same is true for the detecting unit 23 of the electric motor control unit 20-2.

The detecting unit 23 of the electric motor control unit 20-3 obtains the wheel speed measurements taken by the first speed sensor (wheel speed measurements for the wheels 81-1 and 81-2) from the electric motor control unit 20-1 (or electric motor control unit 20-2) (obtains by means of CAN communication). The detecting unit 23 of the electric motor control unit 20-3 obtains the wheel speed measurements taken by the second speed sensor (the wheel speed measurements for the wheels 81-3 and 81-4) from the second speed sensor. The detecting unit 23 of the electric motor control unit 20-3 obtains the wheel speed measurements taken by the third speed sensor (wheel speed measurements for the wheels 81-5 and 81-6) from the electric motor control unit 20-5 (or electric motor control unit 20-6) (obtains by means of CAN communication). The detecting unit 23 of the electric motor control unit 20-3 obtains the wheel speed measurements taken by the fourth speed sensor (wheel speed measurements for the wheels 81-7 and 81-8) from the electric motor control unit 20-7 (or electric motor control unit 20-8) (obtains by means of CAN communication). The same is true for the detecting unit 23 of the electric motor control unit 20-4.

The detecting unit 23 obtains the measurement of the pressing force on the wheel 81 that is applied by the friction member 32, which is taken by the load sensor (receives a pressing force signal). For example, the detecting unit 23 of the electric motor control unit 20-1 obtains a measurement from a load sensor that is designed to measure the pressing force applied to the wheel 81-1 by the friction member 32-1. The detecting unit 23 of the electric motor control unit 20-2 obtains a measurement from a load sensor that is designed to measure the pressing force applied to the wheel 81-2 by the friction member 32-2. The same is true for the detecting units 23 of the electric motor control units 20-3 to 20-8. In other words, the detecting unit 23 obtains a measurement from a single load sensor that is designed to measure the pressing force applied to the corresponding wheel 81 to be braked (the pressing force applied by the friction member 32 corresponding to the wheel 81 to be braked).

The detecting unit 23 obtains an image (receives image data) from a camera that is designed to capture images of the rail 90 on which the vehicle is running, and measures the condition of the rail 90 (e.g., determines whether the rail 90 is wet). The detecting unit 23 may obtain the captured image from the camera or from a different one of the electric motor control units 20 (obtain via CAN communication).

The detecting unit 23 may measure (determine) the condition of the rail 90 by performing image processing (image analysis). The detecting unit 23 may use a learned model to determine if the rail 90 is wet. The learned model may be a machine-learned model using a captured image obtained by image-capturing the wet rail 90 while the vehicle is running, and a captured image obtained by image-capturing the not-wet rail 90 while the vehicle is running.

The detecting unit 23 may obtain a captured image from a camera that is designed to capture images of the wheel 81 (receive image data) and measure the condition of the wheel 81 (e.g., determine whether the wheel 81 has a mirror-like surface, is wet, etc.). The detecting unit 23 of the electric motor control unit 20-1 obtains a captured image from a camera that is designed to capture images of the contact surface of the wheel 81-1 with which the friction member 32-1 is in contact. The detecting unit 23 of the electric motor control unit 20-2 obtains a captured image from a camera that is designed to capture images of the contact surface of the wheel 81-2 with which the friction member 32-2 is in contact. The same is true for the detecting units 23 of the electric motor control units 20-3 through 20-8. In other words, the detecting unit 23 obtains a captured image from one camera that is designed to capture images of the contact surface of the corresponding wheel 81 to be braked.

The detecting unit 23 may measure (determine) the condition of the wheel 81 by performing image processing (image analysis). The detecting unit 23 may use a learned model to determine if the wheel 81 has a mirror-like surface. The learned model may be a machine-learned model using a captured image of the wheel 81 having a mirror-like surface while the vehicle is running, and a captured image of the wheel 81 not having a mirror-like surface while the vehicle is running. The detecting unit 23 may use a learned model to determine if the wheel 81 is wet. The learned model may be a machine-learned model using a captured image of the wet wheel 81 while the vehicle is running, and a captured image of the not-wet wheel 81 while the vehicle is running.

The detecting unit 23 obtains a measurement of the temperature of the friction member 32 that is taken by a temperature sensor (receives a temperature signal). For example, the detecting unit 23 of the electric motor control unit 20-1 obtains a measurement from a temperature sensor that is designed to measure the temperature of the friction member 32-1. The detecting unit 23 of the electric motor control unit 20-2 obtains a measurement from a temperature sensor that is designed to measure the temperature of the friction member 32-2. The same is true for the detecting units 23 of the electric motor control units 20-3 to 20-8. In other words, the detecting unit 23 obtains a measurement from the corresponding temperature sensor that is designed to measure the temperature of the friction member 32 corresponding to the wheel 81 to be braked.

The adjusting unit 24 adjusts (increases or decreases), according to the result of the detection done by the detecting unit 23, the electric power supplied to the electric motor 31 based on the command information (the electric power determined based on the command information), or the electric power supplied to the electric motor 31 based on the emergency brake command (the electric power determined based on the emergency brake command). The adjusting unit 24 of the electric motor control unit 20-1 adjusts the electric power supplied to the electric motor 31-1 (the electric power determined based on the command information or the emergency brake command), according to the result of the detection done by the detecting unit 23 of the electric motor control unit 20-1. The adjusting unit 24 of the electric motor control unit 20-2 adjusts the electric power supplied to the electric motor 31-2 (the electric power determined based on the command information or the emergency brake command), according to the result of the detection done by the detecting unit 23 of the electric motor control unit 20-2. The same is true for the adjusting units 24 of the electric motor control units 20-3 to 20-8. How the adjusting units 24 perform the adjustment will be specifically described below in detail.

If the adjusting unit 24 adjusts the electric power supplied to the electric motor 31, the notification information transmitting unit 25 transmits notification information to the receiver 10 indicating that the electric power has been adjusted. The notification information transmitting unit 25 may transmit notification information to the receiver 10 indicating that the electric power determined based on the command information has been adjusted, if the adjusting unit 24 adjusts the electric power supplied to the electric motor 31 based on the command information (the electric power determined based on the command information). The notification information transmitting unit 25 may transmit notification information to the receiver 10 indicating that the electric power determined based on the emergency brake command has been adjusted, if the adjusting unit 24 adjusts the electric power supplied to the electric motor 31 based on the emergency brake command (the electric power determined based on the emergency brake command). The command information receiving unit 21 and notification information transmitting unit 25 may be constituted by the same component.

The notification information transmitting unit 25 may transmit notification information including identification information identifying the electric motor control unit 20, to the receiver 10. For example, the notification information transmitting unit 25 of the electric motor control unit 20-1 may transmit notification information to the receiver 10 including device identification information of the electric motor control unit (electric motor control device) 20-1. The notification information transmitting unit 25 of the electric motor control unit 20-2 may transmit notification information to the receiver 10 including the device identification information of the electric motor control unit (electric motor control device) 20-2. The same is true for the notification information transmitting units 25 of the electric motor control units 20-3 to 20-8.

The notification information transmitting unit 25 may transmit notification information to the receiver 10 including the result of the adjustment made to the electric power (e.g., the electric power before the adjustment, the amount of adjustment, etc.). For example, if the adjusting unit 24 of the electric motor control unit 20-1 adjusts the electric power supplied to the electric motor 31-1, the notification information transmitting unit 25 of the electric motor control unit 20-1 may transmit notification information to the receiver 10 including the result of the adjustment made to the electric power by the adjusting unit 24 of the electric motor control unit 20-1. If the adjusting unit 24 of the electric motor control unit 20-2 adjusts the electric power supplied to the electric motor 31-2, the notification information transmitting unit 25 of the electric motor control unit 20-2 may transmit notification information to the receiver 10 including the result of the adjustment made to the electric power by the adjusting unit 24 of the electric motor control unit 20-2. The same applies to the notification information transmitting units 25 of the electric motor control units 20-3 to 20-8.

### [First Implementation Example]

A first implementation example describes operations performed to adjust the electric power determined based on the command information upon occurrence of sliding of the wheel 81.

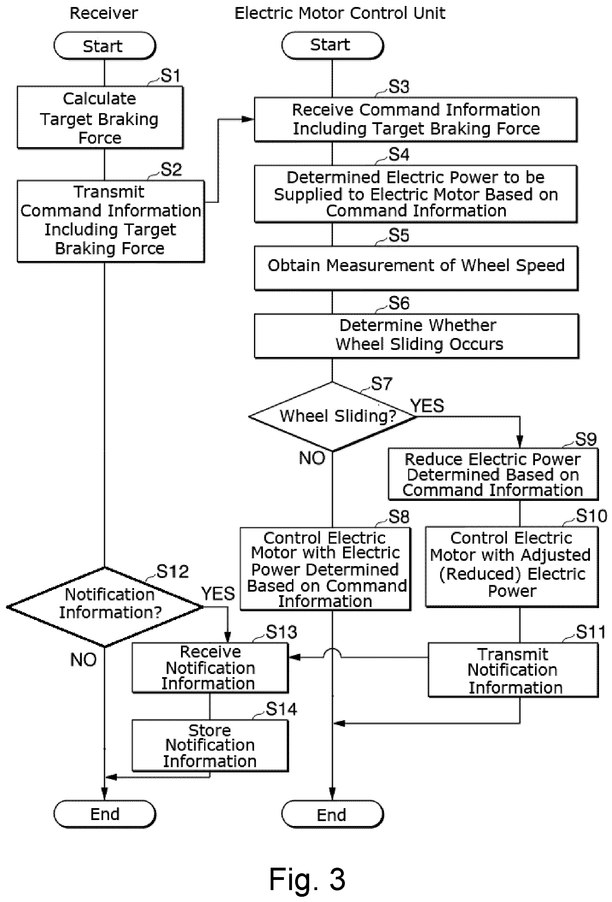

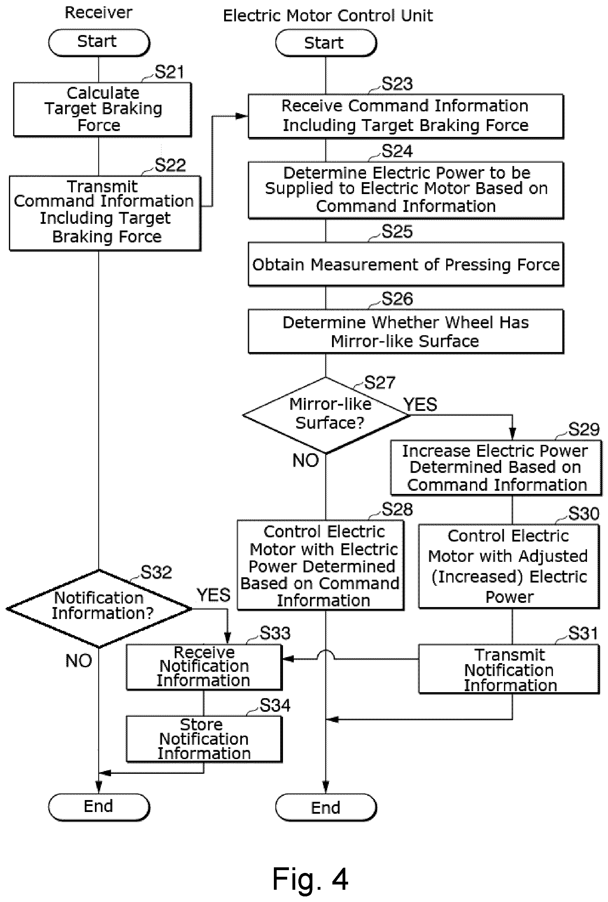

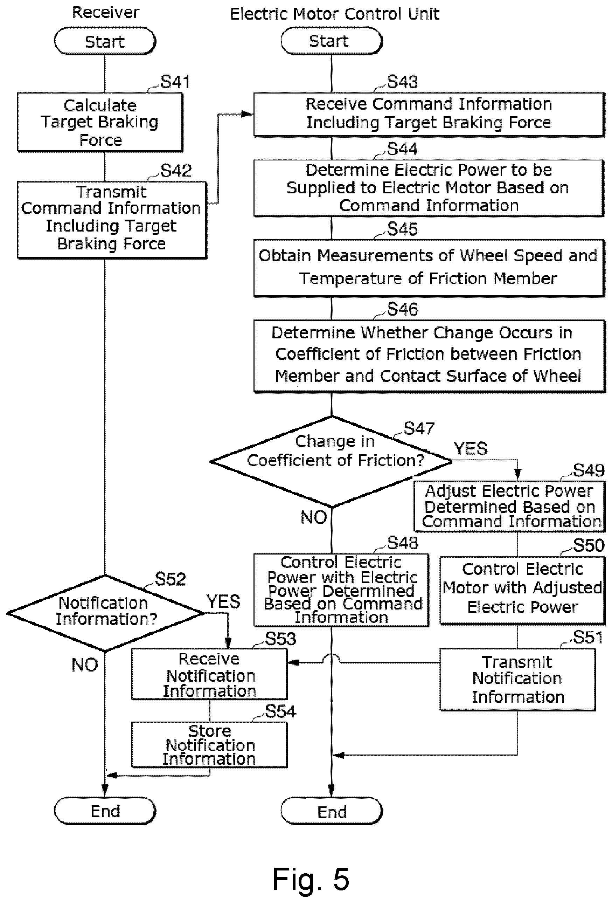

Fig. 3 is a flowchart showing as an example the operations performed by the electromechanical brake control system 1 in the first implementation example. In the flowchart of Fig. 3 (the same applies to the flowcharts of Figs. 4 and 5), the left side shows the operations performed by the receiver 10 and the right side shows the operations performed by the electric motor control units 20. The flowchart in Fig. 3 (the same applies to the flowcharts of Figs. 4 and 5) shows the operations performed by a representative one of the electric motor control units 20. The flowchart of Fig. 3 (the same applies to the flowcharts of Figs. 4 and 5) begins when the receiver 10 receives a service brake command from an external device while the vehicle is running.

The calculating unit 11 calculates a target braking force for the brake unit 30 (step S1). The command information transmitting unit 12 transmits command information including the target braking force calculated in the step S1 (step S2).

The command information receiving unit 21 receives the command information including the target braking force (step S3). The power control unit 22 determines the electric power to be supplied to the electric motor 31 based on the command information received in the step S3 (step S4).

The detecting unit 23 obtains a plurality of wheel speed measurements (step S5). Based on the measurements (multiple wheel speeds) obtained in the step S5, the detecting unit 23 determines whether sliding of the wheel 81 occurs (detects occurrence of sliding) (step S6). Specifically, if the difference between the wheel speed of the wheel 81 to be braked (also referred to as the in-question axle speed) and a standard wheel speed for comparison (also referred to as the reference axle speed, or vehicle speed) is less than a predetermined threshold, the detecting unit 23 determines that sliding of the wheel 81 to be braked is not occurring. The detecting unit 23 determines that sliding of the wheel 81 to be braked is occurring if the difference in speed exceeds the predetermined threshold. That is to say, if the wheel speed of the wheel 81 to be braked declines to such an extent that the difference between the wheel speed and the reference wheel speed exceeds the predetermined threshold, the detecting unit 23 determines that sliding of the wheel 81 to be braked is occurring.

The reference wheel speed may be the wheel speed of the wheel 81 on one of the axles 80 that is different from the axle 80 on which the wheel 81 to be braked is provided (e.g., another axle 80 on the same bogie).

For example, if the difference between the wheel speed of the wheel 81-1 to be braked and the reference wheel speed (the wheel speed of the wheel 81-3 (or wheel 81-4)) is less than the predetermined threshold, the detecting unit 23 of the electric motor control unit 20-1 determines that sliding of the wheel 81-1 is not occurring. The detecting unit 23 of the electric motor control unit 20-1 determines that sliding of the wheel 81-1 is occurring if the difference in speed exceeds the predetermined threshold. As another example, if the difference between the wheel speed of the wheel 81-7 to be braked and the reference wheel speed (the wheel speed of the wheel 81-5 (or wheel 81-6)) is less than the predetermined threshold, the detecting unit 23 of the electric motor control unit 20-7 determines that sliding of the wheel 81-7 is not occurring. The detecting unit 23 of the electric motor control unit 20-7 determines that sliding of the wheel 81-7 is occurring if the difference in speed exceeds the predetermined threshold.

The reference wheel speed may be the maximum (or average) value from among the wheel speeds of the wheels 81 on a plurality of axles 80 (e.g., other axles 80 of the same vehicle) that are different from the axle 80 on which the wheel 81 to be braked is provided.

For example, if the difference between the wheel speed of the wheel 81-1 to be braked and the reference wheel speed (the maximum (or average) value from among the wheel speeds of the wheels 81-3 to 81-8)) is less than the predetermined threshold, the detecting unit 23 of the electric motor control unit 20-1 determines that sliding of the wheel 81-1 is not occurring. The detecting unit 23 of the electric motor control unit 20-1 determines that sliding of the wheel 81-1 is occurring if the difference in speed exceeds the predetermined threshold. As another example, if the difference between the wheel speed of the wheel 81-7 to be braked and the reference wheel speed (the maximum (or average) value from among the wheel speeds of the wheels 81-1 to 81-6)) is less than the predetermined threshold, the detecting unit 23 of the electric motor control unit 20-7 determines that sliding of the wheel 81-7 is not occurring. The detecting unit 23 of the electric motor control unit 20-7 determines that sliding of the wheel 81-7 is occurring if the difference in speed exceeds the predetermined threshold.

If the detecting unit 23 determines that sliding of the wheel 81 is occurring, the detecting unit 23 notifies the adjusting unit 24 of the determination that sliding of the wheel 81 is occurring. If the detecting unit 23 determines that sliding of the wheel 81 is not occurring, the detecting unit 23 may notify the adjusting unit 24 of the determination that sliding of the wheel 81 is not occurring.

If the detecting unit 23 determines that wheel sliding is not occurring (step S7: NO), the power control unit 22 controls the electric motor 31 with the electric power determined in the step S4 (step S8). The flowchart then ends.

If the detecting unit 23 determines that wheel sliding is occurring (step S7: YES), the adjusting unit 24 makes adjustment to the electric power determined by the power control unit 22 in the step S4 by reducing the electric power (step S9).

In other words, if the detecting unit 23 does not detect sliding of the wheel 81 (step S7: NO), the adjusting unit 24 keeps the electric power determined in the step S4 by the power control unit 22 unchanged, or makes no adjustment. Specifically, the adjusting unit 24 keeps the electric power determined in the step S4 by the power control unit 22 unchanged, or makes no adjustment unless the adjusting unit 24 is notified of determination that sliding of the wheel 81 is occurring from the detecting unit 23 (or if the adjusting unit 24 is notified of determination that sliding of the wheel 81 is not occurring). On the other hand, if the detecting unit 23 detects that sliding of the wheel 81 is occurring (step S7: YES), the adjusting unit 24 reduces the electric power from the level determined by the power control unit 22 in the step S4. Specifically, when notified by the detecting unit 23 of determination that sliding of the wheel 81 is occurring, the adjusting unit 24 reduces the electric power determined by the power control unit 22 in the step S4.

The adjusting unit 24 can adjust the electric power in any manners. The adjusting unit 24 may reduce the original electric power (the electric power determined by the power control unit 22) by a predetermined ratio. For example, the adjusting unit 24 may make adjustment by reducing the original electric power by 20% to 80%. The adjusting unit 24 may determine the amount of adjustment according to a predetermined pattern that sets the amount of reduction in electric power based on one or more of the following: the original electric power, degree of wheel sliding (the excess above the threshold), the condition of the rail 90, the vehicle speed, the ambient temperature, and the humidity and accordingly reduce the original electric power. The adjusting unit 24 may calculate the amount of adjustment using a predetermined formula for calculating the amount of reduction in electric power using one or more of the following variables: the original electric power, degree of wheel sliding, the condition of the rail 90, the vehicle speed, the ambient temperature, and the humidity and accordingly reduce the original electric power. The ambient temperature and humidity are obtained, for example, by sensors (not shown). The above has described the case where the electric power is reduced, but the foregoing description also applies to the case where the electric power is increased.

The power control unit 22 controls the electric motor 31 with the electric power adjusted (reduced) in the step S9 (step S10). The notification information transmitting unit 25 transmits notification information to the receiver 10, including notification that the electric power determined based on the command information has been adjusted (step S11).

The notification information receiving unit 13 determines whether there is notification information from the electric motor control unit 20 (step S12). If there is notification information (step S12: YES), the notification information receiving unit 13 receives the notification information (step S13). The storage unit 14 stores the notification information received in the step S13 (step S14). This concludes the flowchart. If there is no notification information (step S12: NO), the flowchart also ends.

As shown in the flowchart in Fig. 3, the electric motor control unit 20 determines whether wheel sliding is occurring. If the electric motor control unit 20 determines that wheel sliding is occurring, it adjusts (reduces) the electric power determined based on the command information in order to eliminate the wheel sliding (to achieve adhesion). If the electric motor control unit 20 determines that wheel sliding is occurring and later determines that wheel sliding is not occurring (if the wheel sliding is eliminated), the electric motor control unit 20 stops adjusting (reducing) the electric power determined based on the command information (maintains the electric power determined based on the command information).

In the first implementation example described above, the operations performed to adjust the electric power determined based on the command information are described. The same description also applies to the operations performed to adjust the electric power determined based on the emergency brake command. In other words, the electric motor control unit 20 determines whether wheel sliding is occurring. If the electric motor control unit 20 determines that wheel sliding is occurring, it adjusts (reduces) the electric power determined based on the emergency brake command in order to eliminate the wheel sliding. If the electric motor control unit 20 determines that wheel sliding is occurring and later determines that wheel sliding is not occurring, it stops adjusting (reducing) the electric power determined based on the emergency brake command (maintains the electric power determined based on the emergency brake command).

### [Second Implementation Example]

A second implementation example describes operations performed to adjust the electric power determined based on the command information if the wheel 81 has a mirror-like surface.

Fig. 4 is a flowchart showing as an example the operations performed by the electromechanical brake control system 1 in the second example. The operations performed in the steps S21, S22, S23, S24, S28, S31, S32, S33, and S34 of the flow chart in Fig. 4 are similar to those in the steps S1, S2, S3, S4, S8, S11, S12, S13, and S14 of the flow chart in Fig. 3, and are thus not described partly or entirely.

The detecting unit 23 obtains a measurement of the pressing force applied to the wheel 81 by the friction member 32 (step S25). Specifically, the detecting unit 23 obtains a measurement of the pressing force from a single load sensor that is designed to measure the pressing force applied to the wheel 81 to be braked.

The detecting unit 23 determines whether the wheel 81 has a mirror-like surface (detects a mirror-like surface) based on the measurement (pressing force) obtained in the step S25 (step S26). For example, the detecting unit 23 determines whether a mirror-like surface is present in the following steps S26A to S26C.

Step S26A: The detecting unit 23 calculates a condition update value with which a wheel condition value is updated, based on the pressing force. The wheel condition value is a numerical value indicating the condition of the contact surface of the wheel 81 and the friction member 32. As the wheel condition value decreases, the coefficient of friction between the friction member 32 and the contact surface of the wheel 81 decreases. For example, if the pressing force is greater than or equal to a predetermined first threshold value, the detecting unit 23 uses the result of multiplying the pressing force by a first coefficient greater than or equal to 0 as the condition update value. If the pressing force is less than the predetermined first threshold value, the detecting unit 23 uses the result of multiplying the pressing force by a second coefficient less than or equal to 0 as the condition update value.

Step S26B: The detecting unit 23 updates the wheel condition value using the condition update value. For example, the detecting unit 23 multiplies the previous wheel condition value by a coefficient of obliviousness (a value between 0 and 1), adds up the result of the multiplication and the condition update value, and uses the result as the new wheel condition value.

Step S26C: The detecting unit 23 determines whether a mirror-like surface is present based on the new wheel condition value. For example, the detecting unit 23 determines that no mirror-like surface is present if the new wheel condition value is equal to or greater than a predetermined second threshold value. The detecting unit 23 determines that a mirror-like surface is present if the wheel condition value is less than the predetermined second threshold value.

The first threshold value, second threshold value, first coefficient, second coefficient, and coefficient of obliviousness are based on actual measurements, simulated values, etc.

If the detecting unit 23 determines that the wheel has no mirror-like surface (step S27: NO), the power control unit 22 controls the electric motor 31 with the electric power determined in the step S24 (step S28). The flowchart then ends.

If the detecting unit 23 determines that the wheel has a mirror-like surface (step S27: YES), the adjusting unit 24 adjusts the electric power determined by the power control unit 22 in the step S24 by increasing the electric power (step S29). It goes without saying that the adjusting unit 24 make such adjustment that the pressing force produced by the adjusted electric power is greater than or equal to the first threshold value.

The power control unit 22 controls the electric motor 31 with the electric power adjusted in the step S29 (the increased electric power) (step S30). The notification information transmitting unit 25 transmits notification information to the receiver 10, including a notification that the electric power determined based on the command information has been adjusted (step S31). The notification information receiving unit 13 receives the notification information from the electric motor control unit 20 (step S33). The storage unit 14 stores the notification information received in the step S33 (step S34). This concludes the flowchart.

As shown in the flowchart in Fig. 4, the electric motor control unit 20 determines whether the wheel 81 has a mirror-like surface. If the electric motor control unit 20 determines that the wheel 81 has a mirror-like surface, it adjusts (increases) the electric power determined based on the command information in order to eliminate the mirror-like surface (to roughen the wheel 81). If the electric motor control unit 20 determines that a mirror-like surface is present and later determines that no mirror-like surface is present (the mirror-like surface is eliminated), it stops adjusting (increasing) the electric power determined based on the command information (maintains the electric power determined based on the command information).

In the second implementation example, the electric motor control unit 20 determines whether the wheel 81 has a mirror-like surface based on the pressing force that presses the friction member 32 against the contact surface of the wheel 81. The electric motor control unit 20, however, may alternatively determine whether the wheel 81 has a mirror-like surface based on the captured image of the wheel 81. In other words, the electric motor control unit 20 may detect a mirror-like surface based on images of the wheel tread (the condition of the wheel).

### [Third Implementation Example]

A third implementation example describes operations performed to adjust the electric power determined based on the command information upon a change in the coefficient of friction between the friction member 32 and the contact surface of the wheel 81.

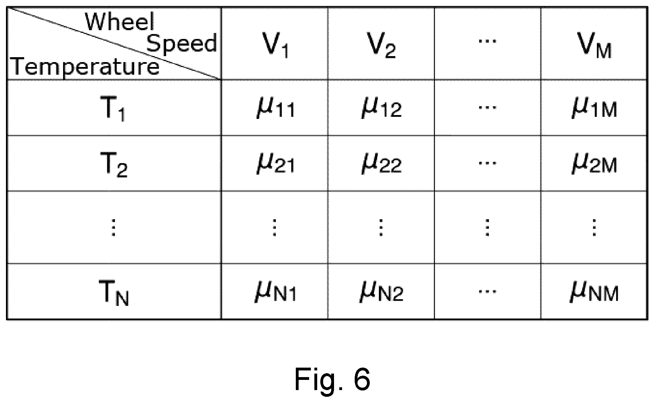

Fig. 5 is a flowchart showing as an example the operations performed by the electromechanical brake control system 1 in the third example. Fig. 6 shows an example of the table used in the third implementation example. The operations in the steps S41, S42, S43, S44, S48, S51, S52, S53, and S54 of the flowchart in Fig. 5 are similar to those in the steps S1, S2, S3, S4, S8, S11, S12, S13, and S14 of the flowchart in Fig. 3, and thus not described partly or entirely.

The detecting unit 23 obtains a measurement of the temperature of the friction member 32 and a measurement of the wheel speed of the wheel 81 (step S45). Specifically, the detecting unit 23 obtains a temperature measurement from one temperature sensor that is designed to measure the temperature of the friction member 32 corresponding to the wheel 81 to be braked. The detecting unit 23 obtains a wheel speed measurement from one speed sensor that is designed to measure the wheel speed of the wheel 81 to be braked.

The detecting unit 23 determines whether a change occurs in the coefficient of friction between the friction member 32 and the contact surface of the wheel 81 (detects a change in the coefficient of friction) based on the measurements (temperature and wheel speed) obtained in the step S45 (step S46). For example, the detecting unit 23 determines the current coefficient of friction by referring to a coefficient of friction determination table shown in Fig. 6.

The coefficient of friction determination table is used to determine the coefficient of friction between the friction member 32 and the contact surface of the wheel 81 based on the temperature of the friction member 32 and the wheel speed of the wheel 81. In the coefficient of friction determination table, the temperature T of the friction member 32 is defined as T₁ < T₂ < ... < T_{N}. In the coefficient of friction determination table, the wheel speed V is defined as V₁ < V₂ < ... < V_{M}. The coefficient of friction µ decreases as the wheel speed V increases, with the temperature T of the friction member 32 being constant. Stated differently, at a certain temperature T_{X}, µ_{X1} > µ_{X2}... > µ_{XM}. The coefficient of friction µ decreases as the temperatures T of the friction member 32 increases, with the wheel speed V being constant. Stated differently, at a certain wheel speed Vx, µ_{1X} > µ_{2X} >... > µ_{NX}.

The coefficient of friction determination table is stored, for example, in the storage unit (not shown) of the electric motor control unit 20. The values in the coefficient of friction determination table are determined based on actual measurements, simulated values, etc.

The detecting unit 23 determines that no change occurs in the coefficient of friction if the difference between the most recent coefficient of friction determined using the coefficient of friction determination table and a reference coefficient of friction (for example, a standard coefficient of friction between the friction member 32 and the contact surface of the wheel 81) is less than a predetermined threshold value.

If the detecting unit 23 determines that no change occurs in the coefficient of friction (step S47: NO), the power control unit 22 controls the electric motor 31 with the electric power determined in the step S44 (step S48). The flowchart then ends.

If the detecting unit 23 determines that a change occurs in the coefficient of friction (step S47: YES), the adjusting unit 24 adjusts the power determined by the power control unit 22 in the step S44 (step S49). Specifically, the adjusting unit 24 adjusts the electric power determined by the power control unit 22 in the step S44 by reducing the electric power if the coefficient of friction increases (i.e., if the most recent coefficient of friction is greater than the reference coefficient of friction by a predetermined threshold value or more) (step S49). If the coefficient of friction decreases (i.e., the most recent coefficient of friction is less than the reference coefficient of friction by a predetermined threshold or more), the adjusting unit 24 adjusts the electric power determined by the power control unit 22 in the step S44 by increasing the electric power (step S49).

The electric power supplied to the electric motor 31 based on the command information can be calculated according to the following formula 1, which uses the target braking force included in the command information, the coefficient of friction between the friction member 32 and the contact surface of the wheel 81, and a fixed value. According to the operation in the step S49, the electric power determined based on the target braking force can be suitably adjusted depending on a change in the coefficient of friction. Electric Power = Target Braking force / (Coefficient of Friction × Fixed Value)

The power control unit 22 controls the electric motor 31 with the electric power adjusted in the step S49 (step S50). The notification information transmitting unit 25 transmits notification information to the receiver 10, including a notification that the electric power determined based on the command information has been adjusted (step S51). The notification information receiving unit 13 receives the notification information from the electric motor control unit 20 (step S53). The storage unit 14 stores the notification information received in the step S53 (step S54). This concludes the flowchart.

As shown in the flowchart in Fig. 5, the electric motor control unit 20 determines whether a change occurs in the coefficient of friction between the friction member 32 and the contact surface of the wheel 81. If the electric motor control unit 20 determines that a change occurs, it adjusts the electric power determined based on the command information.

In the third implementation example, the coefficient of friction between the friction member 32 and the contact surface of the wheel 81 is determined based on the temperature of the friction member 32 and the wheel speed of the wheel 81. However, the coefficient of friction between the friction member 32 and the contact surface of the wheel 81 may be calculated according to a formula that is used to calculate the coefficient of friction between the friction member 32 and the contact surface of the wheel 81 based on the temperature of the friction member 32 and the wheel speed of the wheel 81.

In the third implementation example, the electric motor control unit 20 determines whether a change occurs in the coefficient of friction between the friction member 32 and the contact surface of the wheel 81, based on the temperature of the friction member 32 and the wheel speed of the wheel 81. However, the electric motor control unit 20 may determine whether a change occurs in the coefficient of friction between the friction member 32 and the contact surface of the wheel 81 based on the captured image of the wheel 81. For example, the electric motor control unit 20 may determine that the coefficient of friction between the friction member 32 and the contact surface of the wheel 81 has decreased if it determines that the condition of the wheel 81 has changed from the dry condition to the wet condition based on the captured image of the wheel 81. Furthermore, the electric motor control unit 20 may determine that the coefficient of friction between the friction member 32 and the contact surface of the wheel 81 has increased if it determines that the condition of the wheel 81 has changed from the wet condition to the dry condition based on the captured image of the wheel 81.

The electric motor control unit 20 may determine whether a change occurs in the coefficient of friction between the friction member 32 and the contact surface of the wheel 81 based on the captured image of the rail 90. For example, the electric motor control unit 20 may determine that the coefficient of friction between the friction member 32 and the contact surface of the wheel 81 has decreased if it determines that the condition of the rail 90 has changed from the dry condition to the wet condition based on the captured image of the rail 90. Furthermore, the electric motor control unit 20 may determine that the coefficient of friction between the friction member 32 and the contact surface of the wheel 81 has increased if it determines that the condition of the rail 90 has changed from the wet condition to the dry condition based on the captured image of the rail 90. If the rail 90 is wet, the wheel 81 is also presumed to be wet. If the rail 90 is dry, the wheel 81 is also presumed to be dry.

The electric motor control unit 20 may determine whether a change occurs in the coefficient of friction between the rail 90 and the contact surface of the wheel 81 based on the captured image of the rail 90. For example, the electric motor control unit 20 may determine that the coefficient of friction between the rail 90 and the contact surface of the wheel 81 has decreased if it determines that the condition of the rail 90 has changed from the dry condition to the wet condition based on the captured image of the rail 90. Furthermore, the electric motor control unit 20 may determine that the coefficient of friction between the rail 90 and the contact surface of the wheel 81 has increased if it determines that the condition of the rail 90 has changed from the wet condition to the dry condition based on the captured image of the rail 90. Here, wheel sliding is likely to occur if the rail 90 shows a low coefficient of friction.

The third implementation example describes the operations performed to adjust the electric power determined based on the command information, but the same description applies to the operations performed to adjust the electric power determined based on the emergency brake command. Specifically, the electric motor control unit 20 determines whether a change occurs in the coefficient of friction between the friction member 32 and the contact surface of the wheel 81. If the electric motor control unit 20 determines that a change occurs, it adjusts the electric power determined based on the emergency brake command in a suitable manner depending on whether the change in the coefficient of friction is an increase or decrease.

Although the first to third implementation examples are individually described, the operations can be performed in combination.

For example, the electric motor control unit 20 may reduce the electric power supplied to the electric motor 31 if the wheel 81 is sliding (the first implementation example). Furthermore, the electric motor control unit 20 increases the electric power supplied to the electric motor 31 if the wheel 81 has a mirror-like surface (the second implementation example). If the wheel 81 is sliding and also has a mirror-like surface, the electric motor control unit 20 may reduce the electric power supplied to the electric motor 31 in order to prioritize handling the sliding of the wheel 81.

The electric motor control unit 20 increases the electric power supplied to the electric motor 31 if the coefficient of friction between the friction member 32 and the contact surface of the wheel 81 has decreased (third implementation example). If the wheel 81 is sliding and the coefficient of friction has decreased, the electric motor control unit 20 may reduce the electric power supplied to the electric motor 31 in order to prioritize handling the sliding of the wheel 81.

The electromechanical brake control system 1 relating to the embodiment has been described above. According to the electromechanical brake control system 1, the electric motor control unit 20 detects at least one of occurrence of sliding of the wheel 81, a mirror-like surface of the wheel 81, and the coefficient of friction between the friction member 32 and the contact surface of the wheel 81, and adjusts the electric power supplied to the electric motor 31 (the electric power determined based on the command information, the electric power determined based on the emergency brake command) according to the detection results. Therefore, it takes less time to make and complete adjustment to the electric power supplied to the electric motor 31 according to the detection results. Stated differently, the electromechanical brake control system 1 can exhibit improved responsiveness in adjusting the electric power supplied to the electric motor 31 according to the detection results. In other words, the present embodiment can achieve improved responsiveness to occurrence of sliding of the wheel 81, presence of a mirror-like surface in the wheel 81, and a change in the coefficient of friction between the friction member 32 and the contact surface of the wheel 81.

For example, as described in the first implementation example, it is not the receiver 10 but the electric motor control unit 20 that determines whether wheel sliding is occurring. If the electric motor control unit 20 determines that wheel sliding is occurring, it adjusts the electric power determined based on the command information. If the electric motor control unit 20 determines that wheel sliding is occurring and later determines that wheel sliding is not occurring, it stops adjusting the electric power determined based on the command information (maintains the electric power determined based on the command information). Thus, the present embodiment can achieve improved responsiveness in making adjustment to the electric power upon occurrence of wheel sliding and elimination of wheel sliding. For example, the present embodiment can achieve higher responsiveness than in a case where the receiver 10 controls the process of adjusting the electric power upon occurrence of wheel sliding and elimination of wheel sliding. Specifically, the receiver 10 requires 20 ms to finish sending a single piece of command information to all of the electric motor control units 20. The control by the receiver 10 can not avoid a time lag. In the first implementation example, on the other hand, the control is completed on the electric motor control unit 20 side without going through the receiver 10. Therefore, no time lag is caused, and high responsiveness is achieved. The improved responsiveness in adjusting the electric power can be similarly achieved in the second implementation example where the electric power is adjusted in response to presence of a mirror-like surface in the wheel 81 and in the third implementation example where the electric power is adjusted in response a change in coefficient of friction.

The wheel speed is input into the electric motor control unit 20, not into the receiver 10. This means that the wire extending from the speed sensor is not required to reach the receiver 10. The wiring distance can be shortened.

The following now describes modification examples. The following first to fifth modification examples can be combined as appropriate.

### [First Modification Example]

Even if the electric motor control unit 20 does not detect occurrence of sliding of the wheel 81, it may adjust the electric power supplied to the electric motor 31 in relation to the control performed by the other electric motor control units 20. For example, the electric motor control unit 20 (e.g., the electric motor control unit 20-1) may not detect occurrence of sliding of the wheel 81 (e.g., the wheel 81-1). If a different one of the electric motor control units 20 (e.g., the electric motor control unit 20-3) detects occurrence of sliding of the wheel 81 (e.g., the wheel 81-3) and reduces the electric power supplied to the corresponding electric motor 31 (e.g., the electric motor 31-3), the electric motor control unit 20 (e.g., the electric motor control unit 20-1) may increase the electric power supplied to the electric motor 31 (e.g., the electric motor 31-1).

In other words, the adjusting unit 24 may increase the electric power supplied to the electric motor 31, if the detecting unit 23 does not detect occurrence of sliding of the wheel 81 and the adjusting unit 24 of a different electric motor control unit 20 reduces the electric power supplied to the electric motor 31. If the electric motor control unit 20 adjusts the electric power by reducing the electric power in response to occurrence of wheel sliding, it may notify, via CAN communication, the other electric motor control units 20 of the information indicating that it has reduced the electric power. This ensures that the vehicle as a whole can exert a sufficient braking force even when wheel sliding occurs. The information indicating that the electric power has been reduced is equivalent to the notification information sent by the electric motor control unit 20 to the receiver 10.

### [Second Modification Example]

The electric motor control units 20, which are the slave, may make an abnormality judgment, or determine whether the receiver 10, which is the master, is abnormal (has entered an abnormal state). The electric motor control units 20 may determine that the receiver 10 is abnormal if they do not receive communication data such as communication requests from the receiver 10 for a predetermined period of time (e.g., 1 second) or longer. If the electric motor control units 20 determine that the receiver 10 is abnormal and receive an emergency brake command, a specific one of the electric motor control units 20 may serve as the master. Specifically, the electric motor control units 20 determine whether the receiver 10 is abnormal and may conclude that the receiver 10 is abnormal. In this case, a specific one of the electric motor control units 20 may take over the role of master from the receiver 10, which has been determined to be abnormal, upon reception of an emergency brake command. Note that, other than the specific electric motor control unit 20 serving as the master, the remaining electric motor control units 20 remain serving as the slave.

The electric motor control unit 20 serving as the master may control the process of adjusting the electric power performed by the other electric motor control units 20 (the process of increasing or decreasing the electric power determined based on the emergency brake command). Also, in relation to the first modification example, the electric motor control unit 20 serving as the master may receive notification information (information indicating that the electric power has been decreased or increased) from the other electric motor control units 20 and adjust the braking force exerted by the vehicle as a whole.

### [Third Modification Example]

One electric motor control unit 20 may be provided for one axle 80 (two wheels 81). According to the example shown in Fig. 1, one electric motor control unit 20 controls one brake unit 30 (including the electric motor 31 and friction member 32). Alternatively, one electric motor control unit 20 may control two brake units 30. In a configuration where one electric motor control unit 20 controls one brake unit 30, a situation can arise where different braking forces are applied to the left and right wheels 81 of the same axle 80 (for example, one of the electric motor control units 20 may become abnormal). This is no longer a problem if one electric motor control unit 20 is configured to control two brake units 30.

### [Fourth Modification Example]

According to the foregoing description, CAN communication takes place between the receiver 10 and the electric motor control units 20, but different communication standards (e.g., Ethernet) may be used.

### [Fifth Modification Example]

According to the foregoing description, the electric motor control unit 20 and the brake unit 30 are provided as separate components, but may be configured as a single component. Stated differently, the brake unit 30, which is also referred to as a foundation brake, may be provided with the electric motor control unit 20 (a substrate).

The foregoing is the detailed description of the embodiment of the present invention, as well as implementation examples and modification examples. The specific configurations are not limited to the above embodiment but include design modifications within the purport of the present invention.

According to the foregoing embodiment disclosed herein, a plurality of functions are distributed. Some or all of the functions may be integrated. Any one of the functions may be partly or entirely segmented into a plurality of functions, which are distributed. Irrespective of whether the functions are integrated or distributed, they are acceptable as long as they are configured to attain the object of the invention.

A program for realizing the functions of the devices relating to the above-described embodiment (e.g., the receiver 10, electric motor control device 20) may be stored in a computer-readable storage medium. In this case, the program stored on the storage medium may be loaded into a computer system and then executed. In this manner, the operations may be performed. The "computer system" mentioned above may include an operating system (OS) or hardware such as peripheral devices. The "computer-readable storage medium" mentioned above refers to a storage device such as a portable medium like a flexible disc, a magneto-optical disc, a ROM (Read Only Memory), a flash memory or other writable non-volatile memory, and a DVD (Digital Versatile Disc), and a hard disk built-in to the computer system.

Further, the "computer-readable storage medium" includes storage media that retain the program for some period of time, like a volatile memory (for example, DRAM (Dynamic Random Access Memory)) in an information processing device receiving the program through a network such as the Internet or a communication line such as a telephone line, or in a computer system that operates as a client. The program mentioned above may be transmitted from a computer system that includes a storage device or the like storing the program to another computer system through a transmission medium or by a transmission wave in a transmission medium. The "transmission medium" for transmitting the program refers to a medium that operates to transmit information, like a network (communication network) such as the Internet or a communication line (communication wire) such as the telephone line. Only a part of the functions described above may be implemented in the above program. Further, the functions described above may be implemented by a combination of the above program and other programs previously stored on the computer system. That is, the above program may be what is called a difference file (a difference program).

### LIST OF REFERENCE NUMBERS

1...electromechanical brake control system
10...receiver
11...calculating unit
12...command information transmitting unit
13...notification information receiving unit
14...storage unit
20 (20-1 to 20-8)...electric motor control unit (electric motor control device)
21...command information receiving unit
22...power control unit
23...detecting unit
24...adjusting unit
25...notification information transmitting unit
26...emergency command receiving unit
30 (30-1 to 30-8) ... brake unit
31 (31-1 to 31-8)...electric motor
32 (32-1 to 32-8)...friction member
80 (80a to 80d) ... axle
81 (81-1 to 81-8)...wheel
90...rail

## Claims

1. An electromechanical brake control system (1) comprising a receiver (10), a plurality of brake units (30) for respectively stopping a plurality of wheels (81) provided on a vehicle, and a plurality of electric motor control units (20) for respectively controlling a plurality of electric motors (31) of the plurality of brake units (30) according to command information transmitted from the receiver (10),
wherein the receiver (10) includes:
a calculating unit (11) for calculating target braking forces for the brake units (30) based on a brake command, the brake units (30) being configured to respectively stop the wheels (81) by driving friction members (32) using power transmitted from the electric motors (31); and
a command information transmitting unit (12) for transmitting the command information including the calculated target braking forces to the electric motor control units (20),
wherein each of the electric motor control units (20) includes:
a command information receiving unit (21) for receiving the transmitted command information;
a power control unit (22) for controlling electric power supplied to a corresponding one of the electric motors (31) based on the command information;
a detecting unit (23) for detecting, based on a measurement of at least one of (i) a wheel speed of a corresponding one of the wheels (81), (ii) a pressing force applied to press a corresponding one of the friction members (32) against a contact surface of the corresponding wheel, (iii) a condition of a rail (90) on which the vehicle is running, or (iv) a condition of the corresponding wheel, at least one of (I) whether sliding of the corresponding wheel (81) occurs, (II) whether the corresponding wheel (81) has a mirror-like surface, or (III) whether a change occurs in a coefficient of friction between the corresponding wheel (81) and the corresponding friction member (32) or between the rail (90) and a contact surface of the corresponding wheel; and
an adjusting unit (24) for adjusting, according to a detection result provided by the detecting unit (23), the electric power supplied to the corresponding electric motor (31) based on the command information.

2. The electromechanical brake control system (1) of claim 1,
wherein the detecting unit (23) detects whether sliding of the corresponding wheel (81) occurs, based on a measurement of the wheel speed, and
wherein the adjusting unit (24) reduces the electric power supplied to the corresponding electric motor (31) based on the command information, in response to the detecting unit (23) detecting that sliding of the corresponding wheel (81) occurs.

3. The electromechanical brake control system (1) of claim 1,
wherein the detecting unit (23) detects whether the corresponding wheel (81) has a mirror-like surface based on the pressing force, and
wherein the adjusting unit (24) increases the electric power supplied to the corresponding electric motor (31) based on the command information, in response to the detecting unit (23) detecting the corresponding wheel (81) has a mirror-like surface.

4. The electromechanical brake control system (1) of claim 1,
wherein the detecting unit (23) detects whether a change occurs in the coefficient of friction between the corresponding wheel (81) and the corresponding friction member (32) or between the rail (90) and the contact surface of the corresponding wheel (81) based on measurements of the wheel speed and a temperature of the corresponding friction member (32), and
wherein the adjusting unit (24) reduces the electric power supplied to the corresponding electric motor (31) based on the command information, in response to the detecting unit (23) detecting an increase in the coefficient of friction, and increases the electric power supplied to the corresponding electric motor (31) based on the command information, in response to the detecting unit (23) detecting a decrease in the coefficient of friction.

5. The electromechanical brake control system (1) of claim 1,
wherein each of the electric motor control units (20) includes
a notification information transmitting unit (25) for transmitting, if the adjusting unit (24) adjusts the electric power supplied to the corresponding electric motor (31) based on the command information, notification information to the receiver (10) including a notification that the adjusting unit (24) adjusts the electric power supplied to the corresponding electric motor (31) based on the command information, and
wherein the receiver (10) includes a notification information receiving unit (13) for receiving the transmitted notification information.

6. The electromechanical brake control system (1) of claim 2, wherein the adjusting unit (24) increases the electric power supplied to the corresponding electric motor (31) if the detecting unit (23) does not detect that sliding of the corresponding wheel (81) occurs and an adjusting unit (24) of a different one of the electric motor control units (20) reduces electric power supplied to a corresponding one of the electric motors (31).

7. The electromechanical brake control system (1) of claim 2 or 4,
wherein each of the electric motor control units (20) has an emergency command receiving unit (26) for receiving an emergency command,
wherein the power control unit (22) prioritizes the emergency command over the command information and controls the electric power supplied to the corresponding electric motor (31) based on the emergency command, and
wherein the adjusting unit (24) adjusts, according to a detection result provided by the detecting unit (23), the electric power supplied to the corresponding electric motor (31) based on the emergency command.

8. An electric motor control device for controlling an electric motor (31) of a brake unit (30), the brake unit (30) being configured to stop a wheel (81) provided on a vehicle, the electric motor control device comprising:
a command information receiving unit (21) for receiving command information including a target braking force for the brake unit (30) calculated based on a brake command;
a power control unit (22) for controlling electric power supplied to the electric motor (31) based on the command information;
a detecting unit (23) for detecting, based on a measurement of at least one of (i) a wheel speed of the wheel, (ii) a pressing force applied to press a friction member (32) of the brake unit (30) against a contact surface of the wheel, (iii) a condition of a rail (90) on which the vehicle is running, or (iv) a condition of the wheel, at least one of (I) whether sliding of the wheel (81) occurs, (II) whether the wheel (81) has a mirror-like surface, or (III) whether a change occurs in a coefficient of friction between the wheel (81) and the friction member (32) of the brake unit (30) or between the rail (90) and a contact surface of the wheel; and
an adjusting unit (24) for adjusting, according to a detection result provided by the detecting unit (23), the electric power supplied to the electric motor (31) based on the command information.

9. A program for use in an electromechanical brake control system (1) including a receiver (10), a plurality of brake units (30) for respectability stopping a plurality of wheels (81) provided on a vehicle, and a plurality of electric motor control devices for respectively controlling a plurality of electric motors (31) of the plurality of brake units (30) according to command information transmitted from the receiver (10), the program being configured to cause a first computer to function as the receiver (10) and a second computer to function as each of the electric motor control devices,
wherein the program causes the first computer to:
calculate target braking forces for the brake units (30) based on a brake command, the brake units (30) being configured to respectively stop the wheels (81) by driving friction members (32) using power transmitted from the electric motors (31); and
transmit the command information including the calculated target braking forces,
wherein the program causes the second computer to:
receive the transmitted command information;
control electric power supplied to a corresponding one of the electric motors (31) based on the command information;
detect, based on a measurement of at least one of (i) a wheel speed of a corresponding one of the wheels (81), (ii) a pressing force applied to press a corresponding one of the friction members (32) against a contact surface of the corresponding wheel, (iii) a condition of a rail (90) on which the vehicle is running, or (iv) a condition of the corresponding wheel, at least one of (I) whether sliding of the corresponding wheel (81) occurs, (II) whether the corresponding wheel (81) has a mirror-like surface, or (III) whether a change occurs in a coefficient of friction between the corresponding wheel (81) and the corresponding friction member (32) or between the rail (90) and a contact surface of the corresponding wheel; and
adjust, according to a result of the detection, the electric power supplied to the corresponding electric motor (31) based on the command information.

10. A program for causing a computer to function as an electric motor control device for controlling an electric motor (31) of a brake unit (30), the brake unit (30) being configured to stop a wheel (81) provided on a vehicle,
wherein the program causes the computer to:
receive command information including a target braking force for the brake unit (30) calculated based on a brake command;
control electric power supplied to the electric motor (31) based on the command information;
detect, based on a measurement of at least one of (i) a wheel speed of the wheel, (ii) a pressing force applied to press a friction member (32) of the brake unit (30) against a contact surface of the wheel, (iii) a condition of a rail (90) on which the vehicle is running, or (iv) a condition of the wheel, at least one of (I) whether sliding of the wheel (81) occurs, (II) whether the wheel (81) has a mirror-like surface, or (III) whether a change occurs in a coefficient of friction between the wheel (81) and the friction member (32) of the brake unit (30) or between the rail (90) and a contact surface of the wheel; and
adjust, according to a result of the detection, the electric power supplied to the electric motor (31) based on the command information.

11. A brake control method using a receiver (10), a plurality of brake units (30) for respectively stopping a plurality of wheels (81) provided on a vehicle, and a plurality of electric motor control devices for respectively controlling a plurality of electric motors (31) of the plurality of brake units (30) according to command information transmitted from the receiver (10), the brake control method comprising steps of:
calculating, by the receiver (10), target braking forces for the brake units (30) based on a brake command, the brake units (30) being configured to respectively stop the wheels (81) by driving friction members (32) using power transmitted from the electric motors (31); and
transmitting, by the receiver (10), the command information including the calculated target braking forces to the electric motor control units (20),
receiving, by each electric motor control device, the transmitted command information;
controlling, by the each electric motor control device, electric power supplied to a corresponding one of the electric motors (31) based on the command information;
detecting, by the each electric motor control device, based on a measurement of at least one of (i) a wheel speed of a corresponding one of the wheels (81), (ii) a pressing force applied to press a corresponding one of the friction members (32) against a contact surface of the corresponding wheel, (iii) a condition of a rail (90) on which the vehicle is running, or (iv) a condition of the corresponding wheel, at least one of (I) whether sliding of the corresponding wheel (81) occurs, (II) whether the corresponding wheel (81) has a mirror-like surface, or (III) whether a change occurs in a coefficient of friction between the corresponding wheel (81) and the corresponding friction member (32) or between the rail (90) and a contact surface of the corresponding wheel; and
adjusting, by the corresponding electric motor control device, according to a result of the detection, the electric power supplied to the corresponding electric motor (31) based on the command information.

12. A brake control method using an electric motor control device for controlling an electric motor (31) of a brake unit (30), the brake unit (30) being configured to stop a wheel (81) provided on a vehicle, the brake control method comprising steps of:
receiving command information including a target braking force for the brake unit (30) calculated based on a brake command;
controlling electric power supplied to the electric motor (31) based on the command information;
detecting, based on a measurement of at least one of (i) a wheel speed of the wheel, (ii) a pressing force applied to press a friction member (32) of the brake unit (30) against a contact surface of the wheel, (iii) a condition of a rail (90) on which the vehicle is running, or (iv) a condition of the wheel, at least one of (I) whether sliding of the wheel (81) occurs, (II) whether the wheel (81) has a mirror-like surface, or (III) whether a change occurs in a coefficient of friction between the wheel (81) and the friction member (32) of the brake unit (30) or between the rail (90) and a contact surface of the wheel; and
adjusting, according to a result of the detection, the electric power supplied to the electric motor (31) based on the command information.
